Europäisches Patentamt

European Patent Office

Office européen des brevets

(11) Numéro de publication : **0 066 079**
**B1**

# (12) FASCICULE DE BREVET EUROPÉEN

(45) Date de publication du fascicule du brevet :
07.08.85

(21) Numéro de dépôt : 82103509.4

(22) Date de dépôt : 26.04.82

(51) Int. Cl.⁴ : **B 23 C 5/10**, B 23 B 51/04

(54) Fraise à percer-rainurer.

(30) Priorité : 20.05.81 CH 3285/81

(43) Date de publication de la demande :
08.12.82 Bulletin 82/49

(45) Mention de la délivrance du brevet :
07.08.85 Bulletin 85/32

(84) Etats contractants désignés :
AT BE DE FR GB IT LU NL SE

(56) Documents cités :
EP-A- 0 014 423
DE-B- 2 848 228
FR-A- 2 276 892
GB-A- 896 644
GB-A- 2 019 753
US-A- 2 891 429

(73) Titulaire : STELLRAM S.A.
Route de l'Etraz
CH-1260 Nyon, Vaud (CH)

(72) Inventeur : Jaquiery, Henri
Route de Divonne 3Bis
CH-1260 Nyon, Vaud (CH)
Inventeur : Gehri, Hermann
La Bossière
CH-1197 Prangins, Vaud (CH)

(74) Mandataire : Michell, Michel-Pierre et al
MICHELI & CIE 118, Rue du Rhône Case Postale 47
CH-1211 Genève 6 (CH)

Jouve, 18, rue St-Denis, 75001 Paris, France

## Description

La présente invention concerne une fraise à percer-rainurer, comportant au moins trois plaquettes de coupe amovibles, avec coupe au centre.

Il existe actuellement principalement deux types de fraises à percer-rainurer.

a) Les fraises à une ou plusieurs plaquettes en métal dur brasées sur le corps de la fraise, présentant une coupe au centre. Ces fraises présentent l'avantage d'une fabrication simple et précise en diamètre. En outre l'angle de coupe axial positif favorise l'évacuation des copeaux.

Ces fraises présentent par contre de graves inconvénients qui sont d'une part la diminution en diamètre à chaque réaffûtage des tranchants des plaquettes brasées et d'autre part la nécessité de prévoir des fraises de nuances différentes (forme et angle des arêtes de coupe) pour chaque type de matière à usiner et la nécessité de recourir à une fraise différente pour chaque profil de fond de rainure à réaliser (rayon, chanfreins de différentes valeurs). Enfin les copeaux ne sont pas fragmentés.

b) Les fraises à plaquettes amovibles avec coupe au centre comportant plusieurs plaquettes amovibles en métal dur de forme identique, comme décrites par exemple dans le brevet DE-B-2 848 228.

Ces fraises présentent toutefois les inconvénients suivants : d'une part la hauteur ou longueur de coupe, selon l'axe longitudinal de la fraise, est faible, et d'autre part, avec deux plaquettes de forme identique, les arêtes coupantes se recouvrent fortement ce qui en fait des fraises à deux dents absorbant relativement beaucoup de puissance. Enfin, un autre inconvénient de ce type de fraise à une seule plaquette en bout consiste en ce que celle-ci doit supporter des vitesses de coupe allant de zéro au centre à la valeur maximale à la périphérie.

La présente invention a donc pour objet une fraise à percer-rainurer visant à obvier aux inconvénients précités des fraises connues, et qui est caractérisée par le fait qu'au moins une de ces plaquettes présente une forme différente des autres, par le fait qu'elles sont décalées radialement respectivement axialement l'une par rapport aux autres de façon à se compléter en ne se recouvrant que faiblement pour former une fraise à une seule dent, et par le fait qu'une de ces plaquettes est uniquement périphérique et est fixée sur la face d'appui logeant la plaquette de coupe au centre, et qu'une autre plaquette est simultanément périphérique et frontale et est fixée sur une autre face.

Le dessin annexé illustre schématiquement et à titre d'exemple diférentes formes d'exécution de la fraise à percer-rainurer selon l'invention.

La figure 1 est une vue en bout de la première forme d'exécution de la fraise.

Les figures 2 et 3 sont des vues de côtés, opposées de la fraise illustrée à la figure 1.

Les figures 4 à 9 illustrent schématiquement différentes combinaisons de plaquettes amovibles sur l'extrémité d'une fraise.

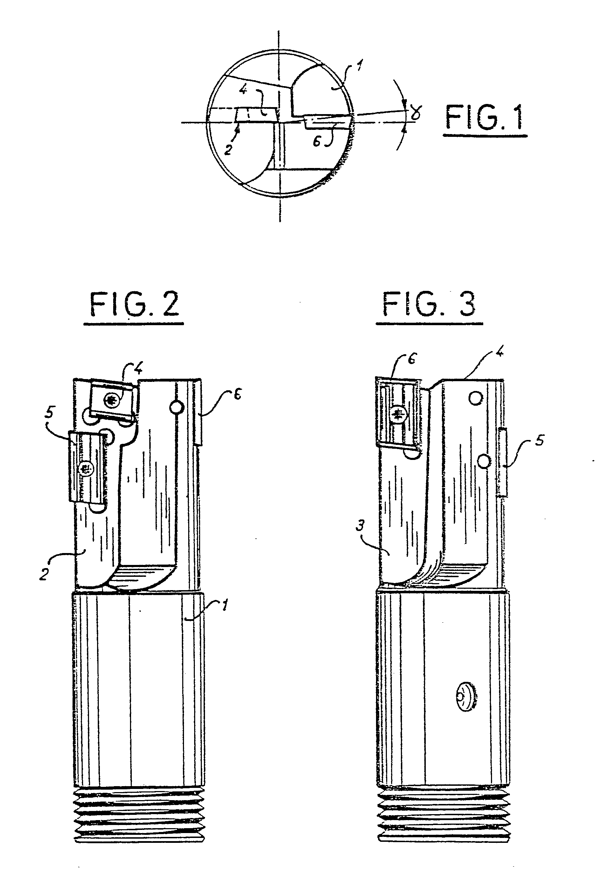

La fraise illustrée aux figures 1 à 3 comporte un corps 1 comportant deux goujures 2, 3 munies de logements destinés à recevoir des plaquettes de coupe amovibles. Dans l'exemple illustré l'une des goujures 2 est aménagée pour recevoir deux plaquettes 4, 5. L'une de ces plaquettes 4 est rhombique ou carrée et permet une coupe au centre ; l'autre plaquette 5 est rhombique ou présente la forme d'un parallélogramme et est prévue pour la coupe périphérique. Ces plaquettes 4, 5 sont fixées à l'aide d'une vis ou pivot central à tête conique, de façon connue sur le corps 1 de la fraise. La plaquette 5 est en retrait par rapport à l'extrémité frontale de la fraise.

L'autre goujure 3 est aménagée pour recevoir une plaquette 6 rhombique ou en forme de parallélogramme adaptée à la coupe périphérique et frontale.

Il faut noter que les arêtes de coupe périphériques des plaquettes 5 et 6 sont disposées sur un même diamètre, mais sont décalées axialement.

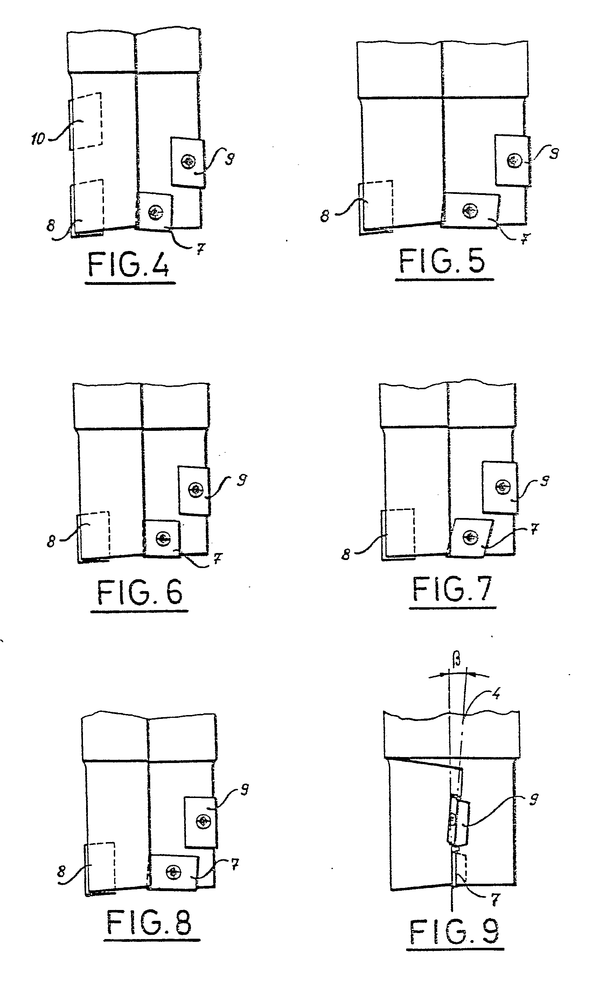

Les figures 4 à 8 illustrent différentes dispositions de plaquettes amovibles carrées, rhombiques ou en forme de parallélogramme dont l'une 7 assure une coupe au centre, une autre 8 une coupe frontale et périphérique tandis que la ou les autres 9, 10 assurent une coupe périphérique uniquement.

La combinaison de ces différentes plaquettes est fonction du diamètre de la fraise ainsi que de la hauteur de coupe ; elles sont disposées de façon à se compléter tout en ne se recouvrant que faiblement pour constituer une fraise à une seule dent.

On remarque qu'une fraise est toujours équipée d'au moins deux plaquettes dont une au moins présente une forme différente des autres.

Les fraises ainsi réalisées sont constituées par deux ou plusieurs lèvres travaillant comme fraise à une seule dent puisque les plaquettes amovibles sont espacées et décalées longitudinalement et radialement et disposées de façon à se compléter pour assurer une continuité de coupe sur tout le diamètre et sur toute la hauteur de coupe.

Du fait de cette disposition la puissance absorbée est réduite car la pression spécifique de coupe est plus faible pour une même avance. On réalise également une coupe fractionnée en zones radiales et axiales ce qui assure une bonne fragmentation des copeaux qui sont ainsi plus faciles à évacuer ce qui diminue également la puissance absorbée.

Cette construction permet également une orientation axiale et radiale de chacune des plaquettes selon des valeurs d'angle optimales en fonction de leur position et de leur fonction soit de perçage soit de rainurage.

La figure 1 illustre une plaquette 4 alignée sur l'axe diamétral X de la fraise tandis que la plaquette 6 forme un angle α avec cet axe. Cet angle α des plaquettes 4 et 6 peut varier entre − 10° et + 10° selon la matière à usiner.

La figure 9 illustre une plaquette 7 alignée sur l'axe longitudinal de la fraise tandis que la plaquette 9 forme un angle β avec cet axe. Cet angle β des plaquettes 7 et 9 est compris entre 0° et 10°. Ceci permet d'obtenir une coupe douce et une bonne éjection des copeaux et permet d'équilibrer les efforts de coupe entre les plaquettes.

L'utilisation de plaquettes de coupe amovibles de précision à pourtour rectifié, permet un bon recouvrement entre celles-ci à la périphérie et l'obtention d'un bon état de surface de la pièce usinée. Une coupe franche est obtenue principalement pour les matériaux tendres.

On peut utiliser pour la plaquette périphérique travaillant en bout une plaquette d'exécution standard à faible rayon ou une plaquette spéciale à pointe fortement rayonnée ou chanfreinée selon le profil désiré du fond de la rainure à réaliser.

Une caractéristique essentielle de la fraise réside dans la combinaison de la forme et de la disposition des plaquettes amovibles qui s'effectue en fonction du diamètre de la fraise et de sa hauteur de coupe. On peut par exemple utiliser :

a) pour la coupe au centre et/ou frontale des plaquettes carrées ou rhombiques dont l'angle de pointe est compris entre 81° et 90°, ou des plaquettes en forme de parallélogramme dont l'angle de pointe est compris entre 81° et 89° ;

b) pour la coupe périphérique des plaquettes rhombiques ou en forme de parallélogramme dont l'angle de pointe est compris entre 81° et 89°.

La combinaison de plaquette amovible de forme différente ainsi que leur disposition permet une parfaite adaptation tant au diamètre des fraises qu'à la hauteur de coupe désirée. Cela ressort particulièrement des figures 4 à 9 du dessin.

La fraise décrite utilisant deux ou plusieurs plaquettes de coupe amovibles se distingue en outre par le fait que quel que soit le nombre des plaquettes qu'elle comporte elle constitue une fraise à une seule dent c'est-à-dire que toutes les plaquettes à coupe frontale respectivement radiale sont positionnées pour une même avance de coupe c'est-à-dire que sur la portion de recouvrement de deux plaquettes, très faible dans cette fraise, seule une plaquette travaille. En tout point de la pièce usinée la totalité de la passe est effectuée par une seule plaquette.

Ceci permet de réduire la puissance absorbée car la pression spécifique de coupe est plus faible pour une même avance réalisée avec une fraise à une dent que pour une fraise à deux dents.

Ainsi la fraise décrite permet un réglage ou un ajustement précis du rayon de coupe de la fraise ainsi que de sa hauteur de coupe tout en réduisant la puissance absorbée pour effectuer un travail donné.

De plus, il est possible pour obtenir des conditions de coupe optimale, d'orienter les plaquettes de coupe frontale par rapport à un plan diamétral de la fraise et les plaquettes de coupe radiale par rapport à un plan longitudinal de la fraise.

En outre cette fraise présente tous les avantages découlant de l'utilisation de plaquettes amovibles de la fixation par vis ou pivot central à tête conique et plus particulièrement :

— possibilité de choix entre différentes géométries de coupe selon la matière à usiner, plaquettes avec brise-copeaux affûtés ou pressés, plaquettes sans brise-copeaux ;

— un retour à la cote nominale après chaque indexage des plaquettes ;

— l'utilisation de plaquettes à flans dépouillés (5° à 20°) permettant une coupe plus positive et donc plus franche avec moins d'efforts (puissance absorbée réduite) ;

— un seul élément de serrage peu volumineux ce qui donne une grande rigidité à la fraise, indispensable pour les opérations de perçage-rainurage effectuées en pleine matière ;

— possibilité d'utiliser des plaquettes avec et sans brise-copeaux.

## Revendications

1. Fraise à percer-rainurer, comportant au moins trois plaquettes de coupe amovibles (4, 5, 6, 7, 8, 9, 10), avec coupe au centre, caractérisée par le fait qu'au moins une de ces plaquettes présente une forme différente des autres, par le fait qu'elles sont décalées radialement respectivement axialement l'une par rapport aux autres de façon à se compléter en ne se recouvrant que faiblement pour former une fraise à une seule dent, et par le fait qu'une (5, 9) de ces plaquettes est uniquement périphérique et est fixée sur la face d'appui logeant la plaquette de coupe au centre, et qu'une autre plaquette (6, 8) est simultanément périphérique et frontale et est fixée sur une autre face.

2. Fraise selon la revendication 1, caractérisée par le fait qu'elle comporte une seconde plaquette (10) uniquement périphérique fixée sur la même face que la plaquette simultanément périphérique et frontale.

3. Fraise selon l'une des revendications 1 et 2, caractérisée par le fait que les plaquettes de coupe au centre et/ou de coupe frontale sont carrées, rhombiques ou en forme de parallélogramme.

4. Fraise selon la revendication 3, caractérisée par le fait que les plaquettes de coupe carrées ou rhombiques présentent des angles de pointe compris entre 81° et 90°, tandis que les plaquettes de coupe en forme de parallélogramme présentent des angles de pointe compris entre 81° et 89°.

5. Fraise selon la revendication 3 ou la revendication 4, caractérisée par le fait que les plaquettes pour la coupe périphérique (5, 9, 10) sont rhombiques ou en forme de parallélogramme et présentent un angle de pointe compris entre 81° et 89°.

6. Fraise selon l'une des revendications 1 à 5, caractérisée par le fait que l'arête de coupe de la plaquette de coupe au centre (4) est située dans un plan diamétral de la fraise.

7. Fraise selon la revendication 6, caractérisée par le fait que l'arête de coupe des plaquettes de coupe frontale forme un angle α avec un plan diamétral de la fraise compris entre − 10° et + 10°.

8. Fraise selon l'une des revendications 1 à 7, caractérisée par le fait que le plan de coupe de la plaquette de coupe frontale et périphérique est situé dans un plan diamétral de la fraise.

9. Fraise selon la revendication 8, caractérisée par le fait que le plan de coupe des plaquettes de coupe périphériques est situé dans un plan formant un angle avec un plan diamétral de la fraise compris entre 0° et + 10°.

## Claims

1. Cutter for boring and slotting having at least three removable cutter bits (4, 5, 6, 7, 8, 9, 10), with a center cup, characterized by the fact that at least one of these bits presents a shape different from the others, by the fact that they are offset radially respectively axially with respect to each other so as to complement but only slightly overlap each other thereby providing a single tooth cutter, and by the fact that one (5, 9) of said bits is only peripheral and is fixed on the bearing face that houses the central cutting bit, and that another bit (6, 8) is simultaneously peripheral and frontal and is fixed on another face.

2. Cutter according to claim 1, characterized by the fact that it comprises a second bit (10) which is only peripheral and fixed on the same face than the bit simultaneously peripheral and frontal.

3. Cutter according to one of claims 1 and 2, characterized by the fact that the cutter bits at the center and/or on the forward face are square, rhombic or parallelepipedal.

4. Cutter according to claim 3, characterized by the fact that the square or rhombic cutter bits have point angles comprised between 81° and 90°, while the parallelepipedal cutter bits have point angles comprised between 81° and 89°.

5. Cutter according to claim 3 or claim 4, characterized by the fact that the peripheral cutter bits (5, 9, 10) are rhombic or parallelepipedal and have point angles comprised between 81° and 89°.

6. Cutter according to one of claims 1 to 5, characterized by the fact that the cutting edge of the central cutter bit (4) is located in a diametrical plane of the tool.

7. Cutter according to claim 6, characterized by the fact that the cutting edge of the forward cutter bits forms an angle α with a diametrical plane of the tool comprised between − 10° and + 10°.

8. Cutter according to one of claims 1 to 7, characterized by the fact that the cutting plane of the forward and peripheral cutter bit is located in a diametrical plane of the tool.

9. Cutter according to claim 8, characterized by the fact that the cutting plane of the peripheral cutter bits is located in a plane forming an angle with a diametral plane of the cutter comprised between 0 and + 10°.

## Patentansprüche

1. Fräswerkzeug zum Bohren und Nuten mit mittigem Schnitt, mit zumindest drei Wendeschneidplatten (4, 5, 6, 7, 8, 9, 10), dadurch gekennzeichnet, daß zumindest eine dieser Schneidplatten eine von den anderen verschiedene Form hat, daß die Schneidplatten radial bzw. axial gegeneinander derart versetzt sind, daß sie einander ergänzen, indem sie einander nur geringfügig unter Bildung eines Fräswerkzeuges mit einem einzigen Zahn überlappen, und daß eine (5, 9) dieser Platten nur umfangsseitig angeordnet ist und auf der Anlagefläche der mittig schneidenden Platte sitzt, wogegen eine andere Platte (6, 8) zugleich umfangsseitig und stirnseitig angeordnet und auf einer anderen Fläche befestigt ist.

2. Fräswerkzeug nach Anspruch 1, dadurch gekennzeichnet, daß es eine zweite Platte (10) aufweist, die nur umfangsseitig angeordnet und auf der gleichen Anlagefläche wie jene Platte befestigt ist, die zugleich umfangsseitig und stirnseitig angeordnet ist.

3. Fräswerkzeug nach Anspruch 1 oder 2, dadurch gekennzeichnet, daß die mittig und/oder stirnseitig schneidenden Platten quadratisch, rhombisch oder parallelogrammförmig sind.

4. Fräswerkzeug nach Anspruch 3, dadurch gekennzeichnet, daß die quadratischen oder rhombischen Schneidplatten Spitzenwinkel zwischen 81° und 90° aufweisen, während die parallelogrammförmigen Schneidplatten Spitzenwinkel zwischen 81° und 89° aufweisen.

5. Fräswerkzeug nach Anspruch 3 oder 4, dadurch gekennzeichnet, daß die Schneidplatten (5, 9, 10) für den Umfangsschnitt rhombisch oder parallelogrammförmig sind und einen Spitzenwinkel zwischen 81° und 89° haben.

6. Fräswerkzeug nach einem der Ansprüche 1 bis 5, dadurch gekennzeichnet, daß die Schneidkante der mittig schneidenden Platte (4) in einer Diametralebene des Fräswerkzeuges liegt.

7. Fräswerkzeug nach Anspruch 6, dadurch gekennzeichnet, daß die Schneidkante der stirnseitig schneidenden Platten mit einer Diametralebene des Fräswerkzeuges einen Winkel α zwischen − 10° und + 10° einschließt.

8. Fräswerkzeug nach einem der Ansprüche 1 bis 7, dadurch gekennzeichnet, daß die Schnittebene der stirnseitig und umfangsseitig schneidenden Platte in einer Diametralebene des Fräswerkzeuges liegt.

9. Fräswerkzeug nach Anspruch 8, dadurch gekennzeichnet, daß die Schnittebene der umfangsseitig schneidenden Platten in einer Ebene liegt, die mit einer Diametralebene des Fräsers einen Winkel zwischen 0° und + 10° einschließt.

FIG.1

FIG.2

FIG.3

FIG.4

FIG.5

FIG.6

FIG.7

FIG.8

FIG.9